# EUROPEAN PATENT APPLICATION

(11) **EP 4 670 899 A1**
(43) Date of publication of application: **31.12.2025**
(21) Application number: 25184608.5
(22) Date of filing: 23.06.2025
(51) Int. Cl.: B23K 26/08, B23K 37/02, G05B 19/4061

(54) **A MULTIPLE HEAD LASER OPERATING MACHINE AND CORRESPONDING CONTROL METHOD**

(30) Priority: 28.06.2024 IT 202400015013
(71) Applicant: Prima Industrie S.p.A., 10093 Collegno (TO) (IT)
(72) Inventor: BIANCHINI, Luca, I-10093 Collegno (TO) (IT); PIVANTI, Marco, I-10093 Collegno (TO) (IT); MUSSO, Emanuele, I-10093 Collegno (TO) (IT); TIOZZO, Moreno, I-10093 Collegno (TO) (IT); VIVAN, Claudio, I-10093 Collegno (TO) (IT)
(74) Representative: Buzzi, Notaro & Antonielli d'Oulx S.p.A.

(57) **Abstract**

A laser operating machine, comprising a plurality of laser operating heads (OH₁, OH₂, OH₃, OH₄) configured to perform laser processing, mounted on respective cantilevers (14₁, 14₂, 14₃, 14₄), said cantilevers (14₁, 14₂, 14₃, 14₄) being mounted on at least a base element (11l, 11r) with an elongated shape, movable along a base element longitudinal axis (X) of said at least base element (11l, 11r),
each cantilever (14₁, 14₂, 14₃, 14₄) extending substantially orthogonal with respect to said base element longitudinal axis (X),
each cantilever (14₁, 14₂, 14₃, 14₄) being actuated by a respective actuation system (A₁, A₂, A₃, A₄) comprising at least a translation along said base element longitudinal axis (X) and a cantilever longitudinal axis (Y) orthogonal to such base element longitudinal axis (X).

## Description

### Technical field

The description relates to a laser operating machine having a plurality of laser operating heads, mounted on cantilevers.

One or more embodiments relate to a method for controlling operating machines, specifically for laser processing, such as those used in laser cutting machines. Other embodiments may refer to laser welding or other laser machining.

### Background

Multiple head laser operating machines are known, which have a plurality of laser heads, moved by a movement system in an operating area, e.g. for cutting or welding.

Multiple head laser operating machines can be used to increase efficiency in cutting or welding operations on large size parts. However, the current multiple head machine movements are difficult to program, e.g. part program, since in general it is desired to avoid overlapping operating areas of each head, in order to avoid collision.

Document CN106181068A for instance discloses a solution with laser cutting machine with three laser cutting heads (seemingly not three-dimensional) which operate relatively independently and are distributed at the upper right end of the laser cutting table and on the two sides, where are two base elements or supports.

Also, this solution achieves a limited success, as the arrangement appears to have intrinsic limitation in having the laser heads operating in the same areas between the base elements.

### Object and summary

An object of one or more embodiments is to contribute in adequately addressing the issues discussed in the foregoing.

According to one or more embodiments, that object can be achieved via a laser operating machine apparatus having the features set forth in the claims that follow.

One or more embodiments may relate to a corresponding control method or process.

One or more embodiments may be equipped on board any processing machine, such as a laser cutting operating machine, for instance.

One or more embodiments may include a computer program product loadable in the memory of at least one processing circuit (e.g., a computer) and including software code portions for executing the steps of the method when the product is run on at least one processing circuit. As used herein, reference to such a computer program product is understood as being equivalent to reference to a computer-readable medium containing instructions for controlling the processing system in order to co-ordinate implementation of the method according to one or more embodiments. Reference to "at least one computer" is intended to highlight the possibility for one or more embodiments to be implemented in modular and/or distributed form.

The claims are an integral part of the technical teaching provided herein with reference to the embodiments.

One or more embodiments facilitate operation with multiple cantilever beams on facing base elements or basements.

One or more embodiments facilitate introduction or extraction of fixtures from the working area.

### Brief description of the several views of the drawings

One or more embodiments will now be described, by way of non-limiting example only, with reference to the annexed Figures, wherein:
Figure 1 is an isometric view of an operating laser machine apparatus as per the present disclosure;
Figure 2 is a schematic representation of modes of operation of the operating laser machine apparatus as per the present disclosure;
Figure 3 is a schematic representation further detailing modes of operation of the operating laser machine apparatus as per the present disclosure;
Figure 4 is an exploded view from an above point of a portion of said operating laser machine apparatus as per the present disclosure
Figure 5 is an exploded view from a below point of a portion of said operating laser machine apparatus as per the present disclosure;
Figure 6 is a view of the operating head of said operating laser machine apparatus as per the present disclosure;
Figure 7 is a flow diagram representing an example of a control method of said operating laser machine apparatus as per the present disclosure- Figure 8 is an isometric view of the laser machine apparatus in a work phase of fixture removal/introduction;
Figure 8 is an isometric view of the laser machine apparatus in a work phase of fixture removal/introduction.
Figure 9 is a left side view of the portion of operating laser machine apparatus of Figure 4 and 5.

Corresponding numerals and symbols in the different figures generally refer to corresponding parts unless otherwise indicated.

The figures are drawn to clearly illustrate the relevant aspects of the embodiments and are not necessarily drawn to scale.

The edges of features drawn in the figures do not necessarily indicate the termination of the extent of the feature.

### Detailed description

In the ensuing description, one or more specific details are illustrated, aimed at providing an in-depth understanding of examples of embodiments of this description. The embodiments may be obtained without one or more of the specific details, or with other methods, components, materials, etc. In other cases, known structures, materials, or operations are not illustrated or described in detail so that certain aspects of embodiments will not be obscured.

Reference to "an embodiment" or "one embodiment" in the framework of the present description is intended to indicate that a particular configuration, structure, or characteristic described in relation to the embodiment is comprised in at least one embodiment. Hence, phrases such as "in an embodiment" or "in one embodiment" that may be present in one or more points of the present description do not necessarily refer to one and the same embodiment.

Moreover, particular conformations, structures, or characteristics may be combined in any adequate way in one or more embodiments.

The references used herein are provided merely for convenience and hence do not define the extent of protection or the scope of the embodiments.

For the sake of simplicity, in the following detailed description a same reference symbol may be used to designate both a node/line in a circuit and a signal which may occur at that node or line.

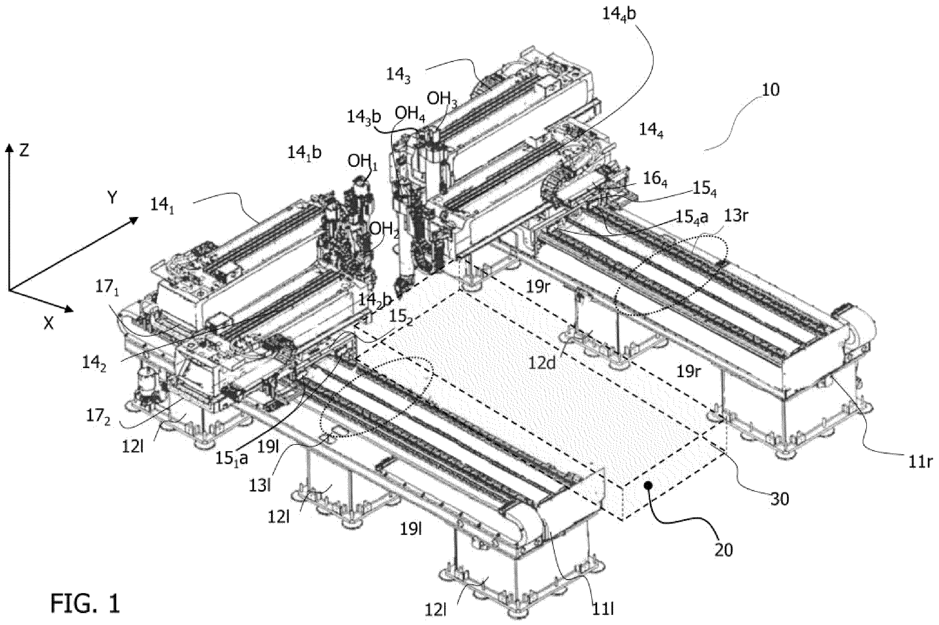

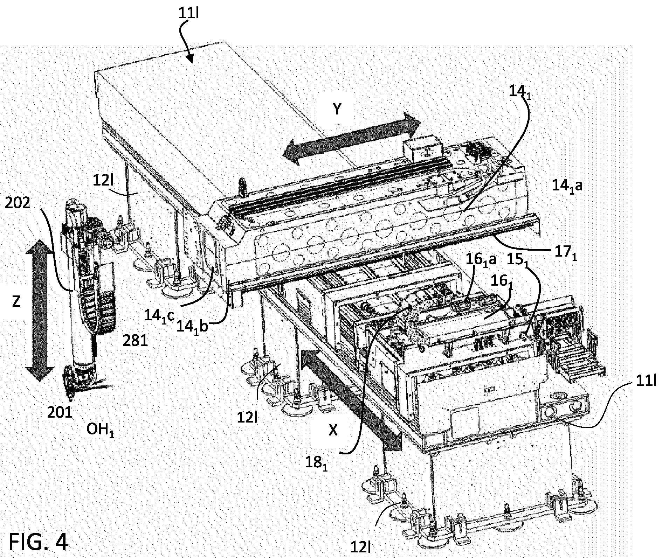

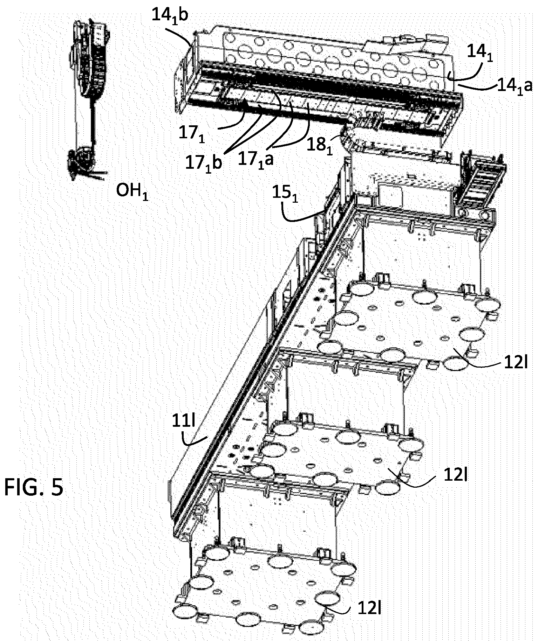

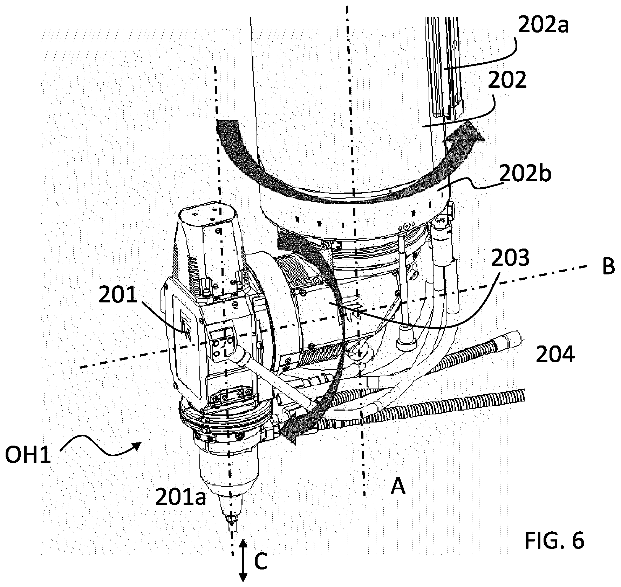

Figure 1 is a diagram exemplary of an isometric view of a laser operating machine apparatus 10, preferably configured to perform three-dimensional (3D) laser cutting of materials. Since not all the components of the apparatus 10 are visible in such view, the following description makes also reference to elements, components or details which are shown in the exploded view of figures 4, 5 of a portion of the apparatus (first base element, with corresponding cantilevers and operating heads) and the detail view of figure 6, showing the laser head.-

As exemplified in Figure 1, the laser operating machine apparatus 10 comprises a first base element, or base, or basement, 111 and a second base element 11r having a substantially oblong, specifically parallelepipedal, shape, i.e. a beam, and arranged parallel to one another along their longest side, i.e. along their longitudinal axes (e.g., along the X axis of a Cartesian set of coordinates).

In the example shown, the base elements 111, 11r are raised with respect to a pavement level, for instance of the environment, e.g., factory, housing the laser operating machine apparatus 10, via a plurality, in the exemplary embodiments three, pillars 121 with reference to the first base element 111. As exemplified in Figure 1, two pillars 121 can be located at opposite ends of each base element 111, 11r, while a third pillar 12l can be located in the central portion along the longitudinal axis X of each base element 111, 11r. t Such an arrangement of pillars 121 defines between each pair of pillars 121 a respective opening 19l. These openings 19l, which allow to access an operating area 30 of the apparatus 10, facilitate introducing fixtures with parts within such operating area 30 of the laser machine apparatus 10, replacing them with relative ease without the necessity of removing components at the sides of the working area 30. This determines that, if safety conditions allow, removal of the fixtures could possibly be performed while cantilevers and operating heads, e.g. laser cutting heads, in the other portion of the working area 30, e.g. the portion not corresponding to the opening 19r through which the fixtures is replaced, continue to operate. Fixtures are supports used in laser 3D cutting to position the part to be cut and to hold it in the working area of the machine in a repeatable way. They are known also as reference fixtures, fixing gauges and jigs. Of course, and analogous arrangement, with, pillars 12r and openings 19r is provided for the second base element 11r. It is underlined that as openings 19l, 19r are present below both base elements 11s, 11r, the openings below one of the base elements, e.g. 11s, can be used for the fixtures, as explained, and the other openings below the other base elements can be used for removing scraps deriving from the machining, e.g. laser cut scraps.

It is here underlined that the support of the cantilevers is described here as a base element 111, 11r, supported on pillars 121, 12r, in particular to underline the creation of lateral openings 19l, 19r to access the working region 30 under the beams of 111, 11r.

Each base element 111, 11r and the corresponding pillars 121, 12r can be considered to correspond to a whole base or basement for the respective cantilevers as well.

As exemplified in Figure 1, the upper surface of each base element 111, 11r carries to guiding tracks (or linear guides) 13r, 13l comprising at least one rail each and extending throughout the X direction of the base elements 111, 11r.

As exemplified in Figure 1, respective operating head carriage elements, i.e. carrying the heads, specifically cantilever beams 14₁, 14₂, 14₃, 14₄ configured to slide along the guiding tracks 13r, 13l are arranged mounted on the base elements engaging said guiding tracks 13l, 13r.

In the example of Figure 1, with reference to the first base element 111, a first pair of cantilever beams 14₁, 14₂, having thus also a parallelepipedal shape, is arranged with their longest sides, i.e., their cantilever longitudinal axis, parallel therebetween and orthogonal to the longest side, i.e. base element longitudinal axis, of the first base element 111, where the first pair of cantilever beams 14₁, 14₂ are coupled to the first guiding track 13l to slide or roll along the first base element 111 via a first movable support 15₁, 15₂ coupled thereto, in particular moving along the rails of the guiding tracks 13l carried by supporting linear shoes, for instance comprising ball bearings, 15₁a and 15₄a are visible in figure 1;

in the same way with reference to the second base element 12r a first pair of cantilever beams 14₃, 14₄ are arranged with their longest sides parallel therebetween and orthogonal to the longest side of the second base element 11r, where the second pair of cantilever beams 14₃, 14₄ are coupled to the second guiding track 13r to slide along the second base element 11r via a second movable support 15₃, 15₄ coupled thereto. Support 15₃ and 15₁ are not visible in the drawings.

As it is clear, elements pertaining to each cantilever 14₁, with i index from 1 to 4 in the examples, such as 14, 15 and also 16, 17, or heads OH, described in the following, pertaining to each respective cantilever are indicated with the same index i. Also, for better clarity, reference in the description is made when necessary to all the corresponding elements, e.g. cantilever beams 14₁, 14₂, 14₃, 14₄, even if, due to the type of drawings, they are not all visible, since as said, components with equal index i are basically the same components related to the cantilever or its actuation along directions X and Y (i.e. with the exception of right and left base element 11r, 111 elements, e.g. 12, 13, 14, 19).

Conventionally in the present description the base element longitudinal axis is indicated with X, like the reference axis X to which is in general parallel, while the cantilever longitudinal axis correspondingly is indicated with Y.

As exemplified in Figure 1, each movable support 15₁, 15₂, 15₃, 15₄ corresponds to a moving carriage moving along the tracks 13l, 13r, and carries on its upper portion or surface actuating means 16₁, 16₂, coupled to a respective actuation portion on the facing portion or surface of the cantilever beam 14₁, 14₂, 14₃, 14₄, performing a translation movement orthogonal to the guiding tracks 13l, 13r of the base elements 111, 11r (e.g., parallel to the Cartesian axis X). Therefore, each cantilever beam 14₁, 14₂, 14₃, 14₄ is movable, e.g. by moving on the tracks 13l, 13r on bearings of the movable support 15₁, 15₂, in the X direction, i.e. base element longitudinal axis, along the guiding tracks 13l, 13r via the movable supports 15₁, 15₂, 15₃, 15₄ as well as along the Y direction, i.e. along the cantilever longitudinal axis, via the actuating means 16₁, 16₂, 16₃, 16₄ on the upper surface or portion of the movable supports 15₁, 15₂, 15₃, 15₄ via a respective further actuation portion 17₁, 17₂, 17₃, 17₄ on the cantilever beam 14₁, 14₂, 14₃, 14₄.

It is underlined that as it is clear from the description the apparatus 10 includes the same components of each base element 111, 11r and each cantilever beam 14₁, 14₂, 14₃, 14₄ comprises substantially the same elements also in the actuation systems (A₁, A₂, A₃, A₄ as indicated below), therefore already before and in the following, for simplicity, reference is also made in describing the structure and the operation of the apparatus 10 only to one base element, e.g. 111, and one cantilever beam, e.g. 14₁, the same description applying analogously however to the other base element and cantilevers.

Thus, for instance, the first cantilever beam 14₁ is coupled to the respective further actuation portion 17₁ at a first extremity 14₁a (proximal to the respective base element 11r, 111), i.e., the fixed end of the cantilver, over which lays the full range of movement along the Y axis possible via the actuation portion 17₁. Still in the exemplary scenario considered, a second extremity 14₁b of the exemplary cantilever beam 14₁, i.e., the free end of the cantilever, thrusts from the respective base element 111, 11r along the Y direction.

As exemplified in Figure 1, a respective (e.g., laser) operating head (known per se) is coupled to the second extremity 14₁b of the exemplary cantilever beam 14₁.

As exemplified in Figure 1, the ensemble of second extremities 14₁b, 14₂b, 14₃b, 144b of the cantilever beams 14₁, 14₂, 14₃, 14₄ are directed towards a region 20 (internal the parallel base elements 111, 11r, for instance), that represents a (e.g., 3D) surface XY of a working volume 30.

It is underlined that each cantilever beam 14₁, 14₂, 14₃, 14₄ is actuated by a respective actuation system A₁, A₂, A₃, A₄ which is configured to move the respective cantilever beam 14₁, 14₂, 14₃, 14₄ along a translation axis X, along the base element longitudinal axis, and along a further axis Y orthogonal to axis X, along the cantilever longitudinal axis. The actuation system, e.g. A1 of beam 14₁, in embodiment shown comprises the tracks 13l, the moving support 15₁, the actuating means 16₁, 17₁ moving the cantilever 14₁ along axis Y although it is clear that several variants may be possible, e.g., rack and pinion or ball screw actuations, to obtain the translational movements of the cantilever beam along the X and Y axis.

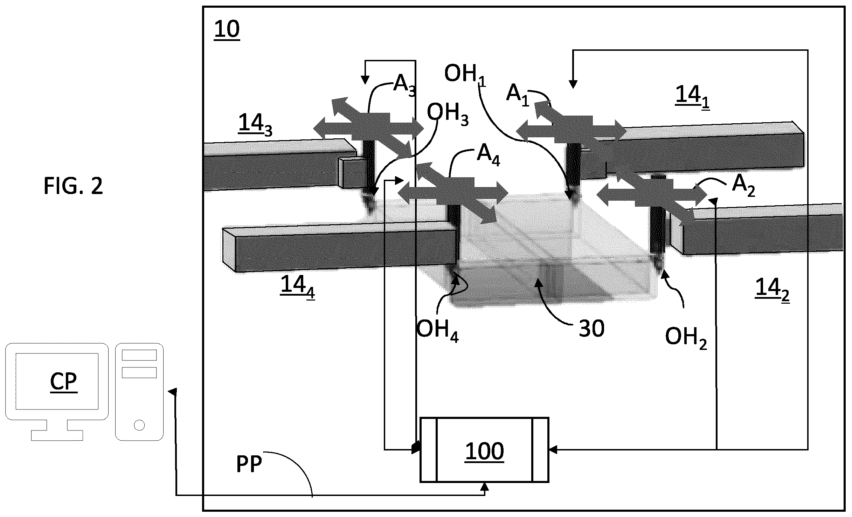

Figure 2 is a diagram illustrating principles underlying one or more embodiments.

As exemplified in Figure 2, the operating machine apparatus 10 comprises a plurality of operating sub-systems, i.e. cantilevers, 14₁, 14₂, 14₃, 14₄ comprising respective operating tool heads OH1, OH2, OH3, OH4, in the example laser cutting heads, although the apparatus 10 may also use laser welding heads or similar type of laser operation. and coupled to respective actuating systems A₁, A₂, A₃, A₄ configured to displace the operating heads OH₁, OH₂, OH₃, OH₄ in the three-dimensional (3D) space to perform machining operations within a working volume 30.

In the exemplary scenario considered, the plurality of operating sub-systems 14₁, 14₂, 14₃, 14₄ comprises laser tool heads OH₁, OH₂, OH₃, OH₄ (per se known), preferably configured to perform 3D laser manufacturing (e.g., cutting). As explained also with reference to figures 1, 4, 5, 6, this may mean that the laser spot is movable along the three dimensions X, Y, Z in the working area 30, among others, this also applying to operating heads and their terminal part 201 and working tip 201a.

A₁, A₂, A₃, A₄ indicates actuation systems along the X axes (e.g., support 15₂ on guiding tracks 13r in figure 1) and Y axes (e.g. actuation 16₁, 17₁, in figure 4, 5)

In embodiments, the actuating systems A₁, A₂, A₃, A₄, which comprise at least the actuation along its longitudinal (Y) and transversal (X) axes of the cantilever, e.g. 14₁, may comprise other electromechanical linear actuators (known per se) coupled to the movable supports, e.g. 15₁, for movement along respective guiding tracks 13r, 13l based on control signals received from a CNC control unit 100 which translates the user input (e.g., provided via a processing device and/or computer-readable media CP) into machine (e.g., Cartesian) 3D coordinates X,Y,Z.

The processing device CP can be part of a general computer, such as a personal computer (PC), a UNIX workstation, a server, a mainframe computer, a personal digital assistant (PDA), and/or combinations thereof. The computer readable medium CP can include programming code, such as source code, object code or executable code that can be loaded into the memory of the processing device and processed thereby in order to perform the desired functions of the part program generator, as discussed in the following.

The processing device comprises a CAD interface that can receive a part definition from a CAD system, such as AutoCAD, manufactured by Autodesk, Inc. of San Rafael, California; SolidWorks, manufactured by SolidWorks Corp. of Concord, Massachusetts; or CATIA, manufactured by Dassault Systèmes S.A. of Suresnes, France. The part definition can be received in any suitable data file format, including a vector graphics format, such as the .dwg or .dxf file formats (used by AutoCAD); a boundary representation format, such as the B-REP file format (used by CATIA V4) based on geometric topological boundaries; or a parametric solid/surface feature-based format (used by CATIA V5).

In one or more embodiments a method for controlling the operating machine apparatus as discussed herein may be used as the control process of the machine operating apparatus 10 or 100.

Still for the sake of simplicity, one or more embodiments are discussed in the following mainly with reference to an operating machine apparatus 10 comprising four operating sub-systems 14₁, 14₂, 14₃, 14₄ each equipped with one respective operating head OH1, OH2, OH3, OH4, being otherwise understood that such a number of operating sub-systems and operating heads is purely exemplary and in no way limiting, provided that they are arranged parallel on facing base element with movement along axis X and axis Y as claimed.

In one or more embodiments, the apparatus 10 exemplified in Figures 1 or 2 comprises any integer number of operating sub-systems, i.e. cantilevers, 14₁, 14₂, 14₃, 14₄ and/or operating heads OH₁, OH₂, OH₃, OH₄ equal to or greater than two.

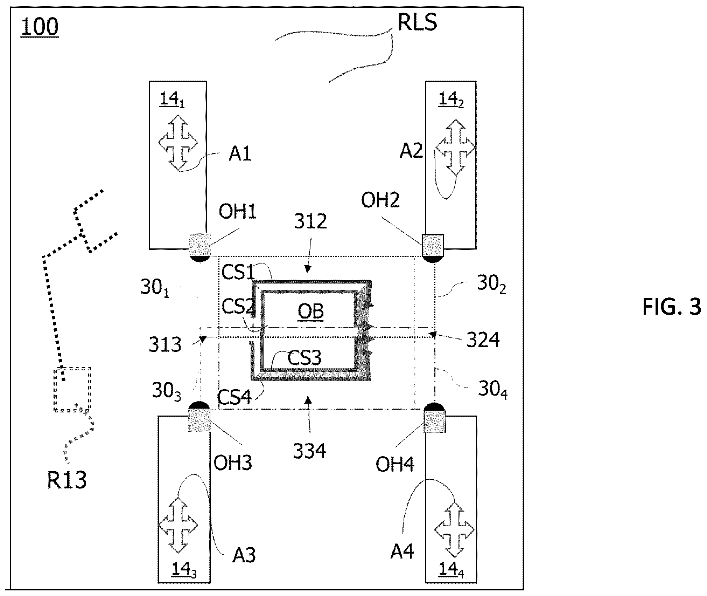

Figure 3 is a further diagram exemplary of principles underlying one or more embodiments.

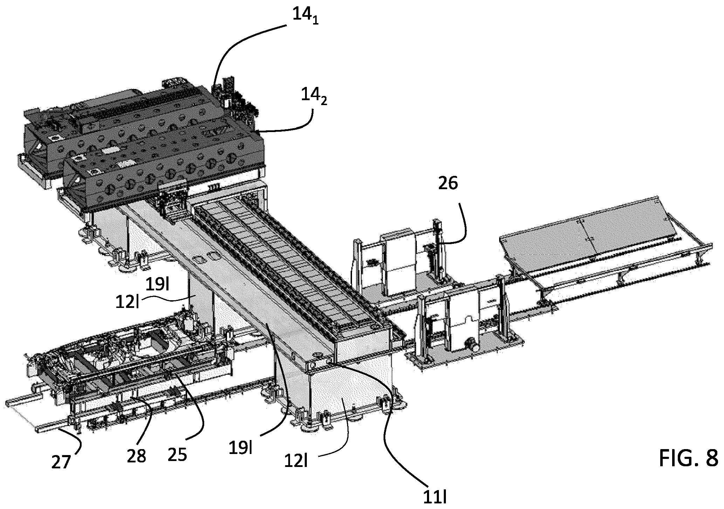

As exemplified in Figure 3, which schematically represents the machine apparatus 10 in a top or plan view, i.e., from above, the operating machine apparatus 10 is configured to perform cutting along a (e.g., circular) shape from at least one target surface of a 3D object located in the manufacturing space 30. As appreciable to those of skill in the art, the target surface may be placed onto a tailored fixture (known per se) configured to provide a backbone for performing laser cutting and shaping thereof. As exemplified in Figure 1, the space between pillars 121 of the basement 111, 111, identifying openings 19l, 19r at the pavement level, is configured to facilitate replacement of fixtures, usually when the manufacturing process is halted. As shown in figure 8, an isometric view of the laser machine apparatus 10 in a work phase of fixture removal/introduction, showing for simplicity only one of the base elements 111 during a stop of the machine 10 a fixture 25 can be placed therein by passing it through the opening 19l among central and extremal pillars 121. As shown in figure 8 the fixture 25 is moved along extraction tracks 27 on an extraction cart 28 which bring to support and positioning elements, i.e. a lifting system 26, which hold the fixture 25 and bring it in position for operation, in particular by lifting it. As mentioned, it is not excluded that the solution described may possibly allow, if safety conditions allow, removal of the fixtures while cantilevers and operating heads, e.g. laser cutting heads, in the other portion of the working area 30, e.g. the portion not corresponding to the opening 20s through which the fixtures is replaced, continue to operate.

Thus the laser operating machine 10 comprises base elements, e.g. 111, 11r, carrying the cantilevers and corresponding heads, mounted on pillars, e.g., 121, 12r, above the pavement, i.e. the beams are above the pavement supported by the pillars, thus defining openings, e.g., 19l, 19r, between said pillars, e.g., 121, 12r, and base elements with a size suitable to allow passage of fixtures, e.g. 25, for the working pieces, in particular placing tracks 27 through said openings 19l, 19r.

For instance, each actuating system A₁, A₂, A₃, A₄ in the plurality of sub-systems 14₁, 14₂, 14₃, 14₄ may be configured to displace the respective machine tool heads OH₁, OH₂, OH₃, OH₄ along five axes or degrees of freedom, for instance along the Cartesian axes X, Y, Z and along two further head axes A, B (e.g., head tilt and rotation with respect to the Z axis).

Therefore, the position in space of each operating head OH₁, OH₂, OH₃, OH₄ may be expressed in terms of the numeric coordinates with respect to the actuated axes.

As exemplified in Figure 3, the actuating systems A₁, A₂, A₃, A₄ are configured to displace the respective operating tool heads OH₁, OH₂, OH₃, OH₄ in respective (e.g., partially overlapping) portions of an object manufacturing volume 30 available within the apparatus 10.

For instance:
- a first actuating system A1 is configured to displace a first operating head OH₁ so that it can manufacture a 3D object OB (e.g., a car door ring) within a first portion 30₁ of the manufacturing volume 30;
- a second actuating system A2 is configured to displace a second operating head OH₂ so that it can manufacture a 3D object OB within a second portion 30₂ of the manufacturing volume 30;
- a third actuating system A3 is configured to displace a third operating head OH3 so that it can manufacture a 3D object OB within a third portion 30₃ of the manufacturing volume 30; and
- a fourth actuating system A4 is configured to displace a fourth operating head OH4 so that it can manufacture a 3D object within a fourth portion 30₄ of the manufacturing volume 30.

As exemplified in Figures 2 and 3, it is possible to have partial overlaps among the portions 30₁, 30₂, 30₃, 30₄ of the manufacturing volume 30 that are assigned to each operating head OH1, OH2, OH3, OH4. Such an overlap facilitates increasing a manufacturing speed while at the same time it introduces an increased target precision in control of the movement of the operating heads OH₁, OH₂, OH₃, OH₄ so as to counter the possibility of collisions therebetween while operating in overlapping areas.

As exemplified in Figure 3, one or more robot arms R13 can be present within the system 100, preferably at one of the open sides adjacent the two base beams of the apparatus 10. For instance, the robot arm R13 can be used to place new material sheets over fixtures and/or to move parts at the end of their manufacturing cycle (e.g., move a finished door-ring part after it's been cut). In one or more embodiments, it is possible to perform such a displacement of the worked parts as soon as the operating heads slide along the X axis to move towards the other fixture present in the working space. Therefore, the robot arm R13 can perform during a "masked time", thereby facilitating increasing the productivity of the machine 10. As exemplified in Figure 3, at the end of a processing cycle, the rails RLS going through the window among pillars supporting each base beam can be used to replace fixtures, as discussed in the foregoing with reference to Figure 8.

For instance, as exemplified in Figure 3:
each portion 30₁, 30₂, 30₃, 30₄ has a respective portion volume, for instance defined by a parallelepiped having length along X about 4350 mm, width along Y 1530 mm and height along Z 650 mm;
the total manufacturing volume 30 is a function of the volumes of the respective portions 30₁, 30₂, 30₃, 30₄ and their overlaps, for instance total volume 30 is equal to a parallelepiped having length along X about 4750 mm, width along Y about 2860 mm and height along Z about 650mm.

As exemplified in Figure 3:
the first volume portion 30₁ and the second volume portion 302 have a first partial overlap 312 equal or greater than 83% therebetween; for instance, the first overlap volume 312 can be defined as a parallelepiped having length along X about 4750mm, width along Y about 1530 mm and height along Z about 650 for a total of 4.724 m³;
the third volume portion 303 and the fourth volume portion 304 have a second partial overlap 334 equal or greater than 83%; for instance, the second overlap volume 334 has the same size as the first overlap volume 312;
the first volume portion 30₁ and the third volume portion 303 have a third partial overlap 313 equal or lower than 7%; for instance, the third overlap volume 313 can be defined as a parallelepiped having length along X about 4350 mm, a width along Y about 200 mm and a height along Z about 650 mm for a volume about 0.565 m³; and
the second volume portion 302 and the fourth volume portion 304 have a fourth partial overlap 324 equal or lower than 7%; for instance, the fourth overlap volume 324 has the same size as the third overlap volume 313.

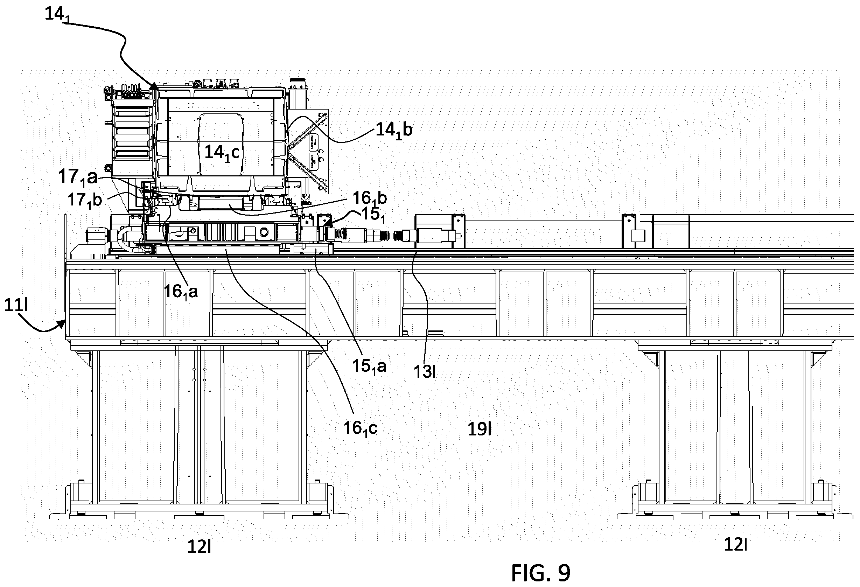

As exemplified in Figure 2, the apparatus 10 is a Computerized Numerical Control (CNC) operating machine in which the actuating devices of actuating systems A₁, A₂, A₃, A₄, in particular with reference to cantilever 14₁, comprising actuation elements such as support 15₁ (with its linear motor 15₁ moving along tracks 13l, visible in the view of figure 9), actuation 16₁, 17₁, are coupled to a CNC controller device 20 configured to provide drive signals thereto in order to displace the respective operating heads, in this case specifically OH₁, within the manufacturing volume 30 according to toolpath trajectories calculated using a method as per the present disclosure.

In a manner per se known, the CNC controller device 100 is further configured to receive signals from sensors and other parts equipped on-board of the apparatus 10 (not visible in Figure 1) in order to apply feedback control mechanisms to the actuating devices A₁, A₂, A₃, A₄ and to drive laser processing via the operating heads OH₁, OH₂, OH₃, OH₄ in the plurality of sub-systems 14₁, 14₂, 14₃, 14₄.

As exemplified with respect to Figure 2, the CNC controller 100 is configured to be coupled to a processing device CP for performing computer-aided design (CAD) and/or computer-aided manufacturing of the parts to be produced via the operating machine 10.

A CAD file generated by a CAD system is the general input of a CAM system. In some cases, the CAD data may be entered directly into the CAM system. Such systems may also provide basic CAD functions.

In a manner per se known, the main purpose of a CAM system is to transform the CAD file, which contains geometrical information about a part, into a part program file PP, which contains sequential commands for a particular CNC machine 10. The part program file PP may also be called machine command or toolpath file.

As exemplified herein, the CNC controller 100 is configured to process the part program file PP and translated the instructions therein into drive signals that set the speeds, feeds, accelerations, and various other parameters of actuators A₁, A₂, A₃, A₄ in the plurality of apparatus sub-systems 13, 14, 16, 17.

As exemplified herein, the CNC controller 100 comprises a Human-Machine Interface, HMI or user interface, UI configured to receive the user data (e.g., via a touchscreen) and/or machine data (e.g., provided by machine sensors) and to enable exchange of data between the user and the machine in terms of input/output data.

As exemplified in Figure 3, in manufacturing an object OB with a multi-head operating machine apparatus 10, the part program PP is to be configured to consider:
how to separate the total cutting shape of the object OB in various sections CS₁, CS₂, CS₃, CS₄ so as to obtain individual toolpaths to various actuators A₁, A₂, A₃, A₄ in the apparatus 10; and
how to manage possible conflict areas at the boundaries of the individual portion volumes 30₁, 30₂, 30₃, 30₄ and/or overlapping portion volumes 312, 324, 313, 334.

A toolpath is not merely a geometry, but also a tool path, i.e., a tool that moves along a path. All machines have areas or directions where the toolpath may be difficult to navigate. A part program PP contains toolpaths, specified in coordinates of lines and circles, or splines using calculation results of the cross section between two surfaces: the tool radius and the mathematically defined surface from the CAD system.

As exemplified in Figure 3, the overlap edges of the object spanning across adjacent volumes 312, 324 become a problem in machine space due to the positioning of the operating heads OH₁, OH₂, OH₃, OH₄ and corresponding CNC machine limits (e.g., speed, acceleration) to achieve position changes.

Based on the above, thus in the laser operating machine apparatus 10 one or more of said cantilevers, **e.g.,** 14₁, 14₂ mounted on one of the base elements, e.g., 111, and one or more of the cantilevers, e.g., 143, 144, mounted on the other base element, e.g., 11r, have a respective length and a displacement, i.e. range of displacement, along said cantilever axis which determine a least an overlap, such as 312, 313, 334, of the respective laser head operating areas, e.g. 30₁, 30₂, 30₃, 30₄.

Figure 4 shows an exploded view of the apparatus 10, seen from a point above such apparatus 10, referred to the first base element 111 and mainly to one cantilever beam 14₁s, where its laser head OH1 having the structure detailed further below with reference to Figure 6 is shown distanced from the cantilever 14₁, which carries such head OH1, and the cantilever 14₁ is shown distanced above the base element 111 so that is possible to observe the movable support 15₁, i.e., a carriage on bearings moving along the tracks 13l, which carries a respective catenary 18₁, which during operation is coupled to the cantilever 14₁, for carrying the electrical power and signals, e.g. from the CNC control unit 100, which are necessary for the actuations. For instances in the catenary 18₁ coupling movable support 15₁ to cantilever 14₁ are carried power and signal which actuate motion along the axis Z and the axes of the operating head OH1, while another catenary brings the power and the signal to the linear motors.

A cantilever actuation comprises actuation portions 16₁ and 17₁, in the example embodying a linear motor, visible in Figure 4, displacing magnetically the cantilever 14₁, which moves sliding or rolling on tracks 17₁b on respective shoes 16₁a, on the upper portion of the support 15₁, on which the sides along axis X of the cantilever 14₁ lie when the cantilever 14₁ is assembled to the movable support 15₁.

The extremes of the cantilever 14₁, 14₁a which rest on the movable support 15₁, and 14₁b carrying the head OH₁ to which is coupled by a flange 14₁c, are visible. As it can be seen from figure 1 and figure 4 the head OH₁ is mounted on the distal extreme 14₁b of the cantilever 14₁, but not in the center with respect to axis X of the cantilever extreme 14₁b, but mounted in a portion closer or closest to the operating region 30, i.e. facing the operating region 30 or nearer to it, in particular substantially in the region of the corner of the cantilever formed by its longest side nearer to or facing the operating region 30 and the shorter side of the distal extreme 14₁b, i.e., the side of the cantilever along axis X. This determines that the head OH₁ is mounted asymmetrically, i.e. not in the middle of the dimension of the cantilever extreme 14₁b and closer to the operating region 30. This may apply also to heads OH₁, OH₂, OH₃, OH₄ as per Figure 2 and 3 operating in respective (e.g., partially overlapping) portions of an object manufacturing volume, i.e. operating region 30, available within the apparatus 10. In particular, the four heads OH₁, OH₂, OH₃, OH₄ are placed all facing the operating region 30 or nearer to it, in particular substantially in the region of the corner of the cantilever formed by its longest side nearer to or facing the operating region 30 and the shorter side of the cantilever corresponding to the distal extreme 14₁b, 14₂b, 14₃b, 14₄b. Thus each head instead of being in the center or middle of the extremity, i.e. free end, of the cantilever, as measured along the axis X, is positioned closer to the operating region 30. This asymmetry facilitates operating the heads in close proximity without experiencing interference from the carriages.

Figure 3, which represent the apparatus 10 in a top view and shows the heads OH₁, OH₂, OH₃, OH₄ operating in respective (e.g., partially overlapping) portions of an object manufacturing volume placed all facing the operating region 30, substantially in the region of the corner of the cantilever formed by its longest side nearer to or facing the operating region 30 and the shorter side of the cantilever corresponding to the distal extreme. In other words, there the heads OH₁, OH₂, OH₃, OH₄ are arranged in a portion closer or closest to the operating region 30 along a direction parallel to axis X, i.e. nearer to or facing the operating region 30, in particular on the corresponding edge or corner.

Figure 5 then shows an exploded view of the apparatus 10, seen from a point below the apparatus, i.e., below the pavement level, analogous to the view of Figure 4 in exploding the components. From below it is possible to observe the actuation portion 17₁ on the cantilever, substantially of rectangular shape, coupled to lower surface or portion of the cantilever 14₁, which comprises a strip of permanent magnets 17₁a arranged in a sequence along the cantilever longitudinal axis (direction Y), in the center portion of the cantilever 141 with respect to the X direction. Such actuation portion 17₁ comprises also a track cantilever rails 17₁b as well, placed parallelly at the sides of the strip of permanent magnets 17₁a, which are movably coupled to corresponding guiding shoes 16₁a on the actuation portion 16₁. The actuation portion 16₁ on the support 15₁ cooperates with the actuation portion 17₁ to displace magnetically the cantilever 141 at is comprises a stator 16₁b with coils, not visible, arranged along the axis Y, which magnetically interact with the magnets 17₁a of portion 17₁, displacing the cantilever 141, i.e. the mover portion of the actuation, along the rails 17₁b sliding or rolling in the shoes 16₁a, in the direction Y. The actuation portions 16₁ and 17₁ embodies thus the two portion of a linear motor, which operation is described no further as it is known in the field., on the shoes 16₁a placed alongside the stator 16b, which guide rails 17₁c placed alongside the actuation portion 17, i.e. parallel to the cantilever longitudinal axis, i.e. displacing the cantilever 14₁ along the Y axis.

The features of the machine 10, namely of the exemplary base element 111 described with reference to figure 4 and 5 are also observable in the lateral or side view of figure 9, which represents the base element 111 seen from a point of view along an axis parallel to axis Y.

As mentioned, figure 9 is a left side view, i.e., shows the left base element 111 along is a longest dimension, i.e., along axis x, in which the cantilever extreme 14₁b is not coupled to the operating head OH₁ and uncovered so that it is possible to observe the actuation of the cantilever 14₁, in particular actuation along axis Y, 16₁, 17₁, as well actuation along axis Y of the movable support 15₁.

Figure 6 shows an isometric view of an exemplary laser head OH1, comprising a first body 202, or base, which is coupled to the extremal portion, e.g. 14₁b of the cantilever 14₁. At its lower extreme the body 202 comprises a rotating flange 202b, revolving or rotating around a longitudinal axis A of the tubular element, parallel to or coinciding with the vertical axis, i.e. axis Z. The body 202 can move vertically along the axis Z with respect to the extremal portion, e.g. 14₁b of cantilever 14₁ through vertical rails 202a, coupled to corresponding shoes on the extremal portion 14₁b, not shown in the figures. As mentioned, the body 202 is mounted through such coupling vertical rails 202a and shoes coupled to extremal portion 14₁b of the cantilever 14₁, in a portion closer or closest to the operating region 30 along a direction parallel to axis X, i.e. nearer to or facing the operating region 30, in particular on the corresponding edge or corner.

The head OH1 comprises a second rotating body 203 which is rotatably supported by the first tubular body 202 around a horizontal axis B by bearings (not shown). In the embodiment illustrated by way of example in the figures, the rotating body 203 is formed by a tubular element arranged coaxially with axis B.

A terminal body 201 is fixed to the second tubular element 203 so that can be rotated around the axis B.

The terminal body 201, which is also a tubular like element with its longitudinal axis parallel to vertical axis Z in the figure (zero position), although it can rotate around axis B as just mentioned, fixed to the second tubular element 203 substantially in an upper region below its upper extreme, comprises at its lower extreme and operating end 201a, through which the laser beam exits in direction of the region 20. The operating end 201a may be fixed or movable with respect to the latter along a direction parallel to the longitudinal axis of the terminal body 201, indicated in the figure as axis C. As mentioned the operating head OH₁ is vertically movable, with respect to the respective along a vertical axis parallel to axis Z Inside the mentioned tubular elements an optical system may convey radiation, by lenses and mirror, in a way known per se, for instance according to the optical system described in the European patent EP2177299B1 by the same Applicant.

It is underlined that the laser operating head described with reference to figure 6 is just an example of a laser operating head which can be mounted on the cantilevers. The cantilevers may of course mount different type of laser operating heads, different for instance in the movement axes, or in the type of operation (e.g. cutting, welding) and other characteristics.

Thus, based on the above, the solution just described refers to a laser operating machine, comprising a plurality of laser operating heads, e.g., OH₁, OH₂, OH₃, OH₄), configured to perform laser processing, mounted on respective cantilevers, e.g., 14₁, 14₂, 14₃, 14₄, said cantilevers, e.g., 14₁, 14₂, 14₃, 14₄, being mounted on at least a base element, e.g. on a cantilever or distributed between two cantilevers 111, 11r, with an elongated shape, movable along a base element longitudinal axis, e.g., X, of said at least a base element, e.g., respective base element,
each cantilever, e.g., 14₁, 14₂, 14₃, 14₄, extending substantially orthogonal with respect to said base element longitudinal axis, e.g., X,
each cantilever, e.g.,14₁, 14₂, 14₃, 14₄, being actuated by a respective actuation system, e.g., A₁, A₂, A₃, A₄, comprising a translation along said base element longitudinal axis, e.g., X, and cantilever longitudinal axis, e.g., Y, orthogonal to such base element longitudinal axis, e.g., Y.

More specifically, the solution just described refers to a laser operating machine, comprising a plurality of laser heads, e.g., OH1, OH2, OH3, OH4, configured to perform laser processing, mounted on respective cantilevers, e.g.,14₁, 14₂, 14₃, 14₄, movable along a base element longitudinal axis, e.g., of one or more base element, e.g.,11l, 11r, having an elongated shape,
comprising two base elements, i.e., the pair 111, 11r, arranged parallel one to the other along their longer dimension at a distance one from the other, identifying an operating area, e.g., 20, 30, in the space between such base elements, e.g.,11l, 11r,
each base element, e.g.,11l, 11r, carrying at least two cantilever, e.g.,14₁, 14₂, 14₃, 14₄, extending inwardly in the space between such base elements, e.g.,11l, 11r, substantially orthogonal with respect to said base element longitudinal axis, e.g., X,
each cantilever, e.g.,14₁, 14₂, 14₃, 14₄, being actuated by a respective actuation system, e.g.,A₁, A₂, A₃, A₄, comprising a translation along said base element longitudinal axis, e.g., Y, and cantilever longitudinal axis, e.g., Y, orthogonal to such base element longitudinal axis, e.g., Y.

As indicated, preferably said one or more cantilevers are at least two on each base element 111, 11r, in particular two for each base element 111, 11r.

According to a relevant aspect, said operating heads, e.g., OH₁, OH₂, OH₃, OH₄, are arranged on the respective cantilever, e.g., 14₁, 14₂, 14₃, 14₄, on the side or corner nearer to or facing the working area, e.g. 30. The plurality of heads, in particular four, OH₁, OH₂, OH₃, OH₄ may be placed all facing the operating region 30 or nearer, along a direction parallel to axis X, to it, in particular substantially in the region of the corner of the cantilever formed by its longest side nearer to or facing the operating region 30 and the shorter side of the cantilever corresponding to the distal extreme 14₁b, 14₂b, 14₃b, 14₄b.

Said operating heads, e.g., OH₁, OH₂, OH₃, OH₄, are mounted on the respective distal extreme, or free end, e.g., 14₁b, 14₂b, 14₃b, 14₄b, of the respective cantilever , e.g., 14₁, 14₂, 14₃, 14₄, mounted in a portion of the distal extreme closer or closest to the operating region 30. In particular said operating heads, e.g., OH₁, OH₂, OH₃, OH₄, are mounted facing the operating region 30 or nearer to it. In particular said operating heads, e.g., OH₁, OH₂, OH₃, OH₄, are mounted substantially in the region of the corner of the cantilever formed by its longest side nearer to or facing the operating region 30 and the shorter side of the cantilever corresponding to its distal extreme 14₁b, 14₂b, 14₃b, 14₄b.

Also, the actuation system, e.g., A₁, A₂, A₃, A₄, comprises a translation along said base element longitudinal axis, e.g., X, and cantilever longitudinal axis, e.g., Y, orthogonal to such base element longitudinal axis, e.g., Y,, comprises cantilever beams, e.g., 14₁, 14₂, 14₃, 14₄, mounted on respective supports, e.g., 15₁, 15₂, 15₃, 15₄, fixedly with respect to movement of the supports, e.g., 15₁, 15₂, 15₃, 154, along said base element longitudinal axis, e.g., X, said cantilevers being mounted displaceable with respect their corresponding support, e.g., 15₁, 15₂, 15₃, 15₄, along said cantilever longitudinal axes, e.g., Y.

The moving support, e.g., 15₁, 15₂, 15₃, 15₄, are mounted on tracks along said base element longitudinal axis, e.g., X, movable by sliding or rolling on bearings.

The cantilevers are assembled to an upper portion of the corresponding supports, e.g., 15₁, 15₂, 15₃, 15₄, e.g., a plate, movable by a translational actuation, e.g., 16₁, 17₁, i.e. an actuator which translates along an axis or linear actuator, displacing the cantilever, e.g., 14₁, with respect to a fixed portion, e.g., 16₁, on said support, e.g., 15₁.

Then, such translational actuation, e.g., 16₁, 17₁, displacing the cantilever, e.g., 14₁, comprises a magnetic linear motor, e.g., 16₁, fixedly coupled to the upper portion of the support, e.g., 14₁, and the cantilever comprises a magnetic actuatable portion, e.g., 17₁, 17₁a, on its lower portion.

A further relevant aspect consists in that said base elements, e.g., 111, 11r, having an oblong shape rest on a plurality of pillars, e.g., 19l, 19l, identifying opening, e.g., 20l, 20r, between them to access the operating area, e.g., 20, 30, in particular to introduce or remove fixtures.

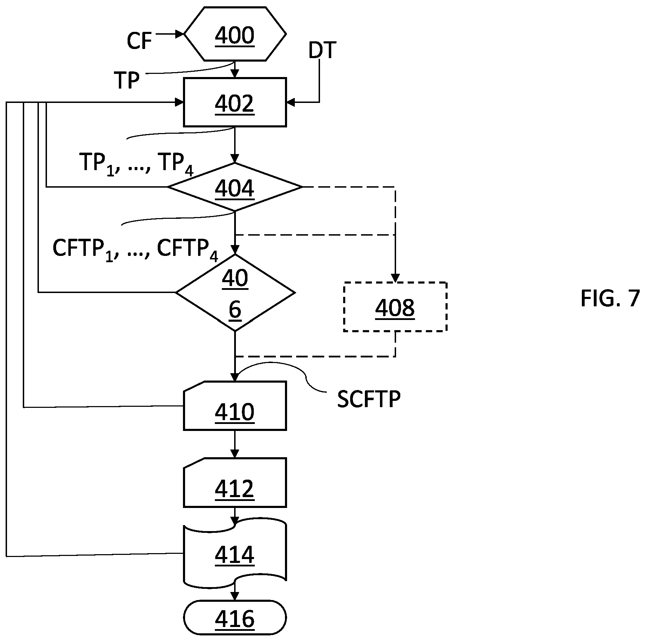

As exemplified in the flow diagram of Figure 7, a method of operating a multi-head operating machine (while reducing possible conflicts) may comprises:
block 400: applying (offline) CAM processing based on a model of the apparatus 10 and a CAD file of the object to be manufactured, obtaining as a result a toolpath TP for producing the object, e.g. for the profile of the shape to be laser cut from a (e.g., top) surface of the object OB;
block 402: via a digital twin model DT of the machine 10 configured to mirror the dynamical performance of the physical apparatus 10, emulating or simulating the execution of the displacement of the toolheads OH₁, OH₂, OH₃, OH₄ of the plurality of sub-systems 14₁, 14₂, 14₃, 14₄, thereby distributing or dividing the whole toolpath TP into a plurality of toolpaths TP₁,...,TP₄ to assign (e.g., via an auto-balancing algorithm) to the operating machine heads OH₁, OH₂, OH₃, OH₄ of the apparatus 10; for instance, the digital twin DT can be provided in a manner per se known thanks to a commercial solution commercialized under the name of Digital Twin provided by Siemens; for instance, the auto-balancing algorithm comprises applying artificial neural network, ANN processing to a set of simulated toolpath partitions to select a way to distribute toolpath that has a reduced time and/or a reduced risk of collisions. In order to do so, the ANN processing stage can be trained using fed training data related to a set of tested or computed toolpaths or collision-free toolpaths SCFTP (obtained as discussed in the following) to apply pattern recognition processing (per se known) to a set of toolpath partitions;
block 404: checking the presence of potential risk for collision in conflict areas CS12, CS23, CS34, CS41 in the plurality of toolpaths TP₁,...,TPₙ, for instance by detecting whether, at any point in time during the simulated manufacturing process, the pair-wise distance between heads falls below a threshold value (e.g., 20 millimeters with an overrun sensitivity of about 0.03 mm); in case of a positive result of the check, indicating the presence of conflicts, going back to block 402;
block 404: in case of a negative result of the check in block 403, providing the plurality of collision-free toolpaths CFTP₁, ..., CFTP₄ as a result;
block 406: emulating (or simulating) each of the collision-free toolpaths received CFTP₁, ..., CFTP₄ (e.g., using an hand-box software suite, per se known) for each of the machine operating heads OH₁, OH₂, OH₃, OH₄ so as to provide enhancement of performance elements of interest for the user (e.g., optimization of speed, reduction of excursion of values in the cinematic parameters of the actuators such as jerk, minimization of the total production time, and so on); any modification effected to a single toolpath (e.g., TP₁ for the first head OH₁ is modified to take into account the fact that this head has an older actuator for displacement along horizontal axis X) triggers the repetition of the operations in blocks 402, 404 in order to verify that the single-toolpath modifications do not introduce collisions among operating heads in the plurality of operating heads OH1, OH2, OH3, OH4; as a result of the second iteration of block 402, 404, 406, a set of collision free toolpaths SCFTP is provided.

Preferably, in block 408 the collision-free toolpaths SCFTP are tagged 408 as collision-free and stored in memory so that they can be identified and retrieved. For instance, in case new modifications effected in block 406 fail to compute a new stable collision-free trajectory, it is possible to go back to the previously calculated ones CFTP₁,...,CFTP₄ and to provide those as the set of collision free toolpaths SCFTP.

In one or more embodiments, collision free toolpaths with respect to those in which collision occur introduce delays among potentially conflicting heads so that one is halted while the other operates. For instance, if two or more heads (e.g., OH₁ with OH₂) are going to collide, one or more head (e.g., OH₁ or OH₂) will be paused until the other is out of reach thanks to a synchronization system.

Such a delay is introduced in a way to balance workloads and minimize at the same time the total manufacturing cycle time for a certain object: for instance, if the among the colliding heads there is one that has a reduced workload with respect to the other, it is the latter that is delayed so as to balance the workloads and reducing the overall time as this way of assigning delays facilitates synchronizing the total time in which each tool is active. For instance, the operation of checking the possible collisions in the toolpath comprises calculating the total cycle time based on operation length and programmed speed of the machine.

As exemplified in Figure **7****,** the method may further comprise:
block 410: for each operating head in the plurality of operating heads OH₁, OH₂, OH₃, OH₄ **(e.g.,** starting from the first operating head OH1) performing a dry run (e.g.., via the HMI of the CNC controller) of the respective collision-free toolpath (e.g., TP₁) of the set of collision-free toolpaths at a speed of movement of the respective head (e.g., OH1) below a certain threshold value (e.g., 10% of the maximum speed) in order to detect whether in the manufacturing environment there is still the possibility of collision among operating heads; in case there is still a collision detected, one head will be paused until the other is out of reach (synchronization system); in case of wrong programming or procedure, the method comprises running a real time collision check on the machine 10 during the dry run, stopping actuators just before a possible collision;
block 412: for each operating head in the plurality of operating heads OH₁, OH₂, OH₃, OH₄ (e.g., starting from the first operating head OH₁) performing a dry run (e.g.., via the HMI of the CNC controller) of the respective collision-free toolpath (e.g., TP₁) of the set of collision-free toolpaths while removing speed limits set in block 410; in case of wrong programming or procedure, the method comprises running a real time collision check on the machine 10 during the dry run, stopping actuators just before a possible collision;
block 414: applying laser cutting processing according to the toolpaths that have passed blocks 410, 412; if there is still the request to apply changes after performing the first cut, it is possible to halt the manufacturing process and go back to the toolpath planning stage 402; the machine 10 may be programmed to introduce a further delay via the synchronization system, pausing one head with respect to another in case a possible collision is detected; in case of wrong programming or procedure, the method comprises running a real time collision check on the machine 10 during the dry run, stopping actuators just before a possible collision;
block 416: manufacturing the object OB via the apparatus 10 (e.g., laser cutting a vehicle component such as a door shield).

In one or more embodiments, in cases there is a request for modifications during the production 416, it is possible to run the entire procedure once again while the program halts attempts to execute the toolpaths without running a simulation on the digital twin.

The verification process of the machine program file PP on a digital twin DT of the apparatus 10 prior to actual execution on the machine facilitates countering later on-machine verification depending on the CNC machine used and the complexity of the part to be verified. On-machine verification may result in large non-cutting times, or dead times, and is therefore nondesirable in some circumstances.

Therefore, one or more embodiments assist a user in countering head or machine conflicts, such as collisions.

It will be otherwise understood that the various individual implementing options exemplified throughout the figures accompanying this description are not necessarily intended to be adopted in the same combinations exemplified in the figures. One or more embodiments may thus adopt these (otherwise nonmandatory) options individually and/or in different combinations with respect to the combination exemplified in the accompanying figures.

Thus, the structure and operation of the solution, as well as its advantages are clear.

The solution described by supplying an operating machine with a plurality of cantilevers having not only a translation movement along the base element longitudinal axis, but also a translation movement along the cantilever longitudinal axis, allow operate simultaneously in a working area.

The solution described by supplying an operating machine with two facing base elements, carrying cantilever beams, identifying in the area between them a working area, and by placing at least on one of the base elements, at least two cantilever beams arranged parallel carrying operating laser heads, the cantilever having not only a translation movement along the base element longitudinal axis, but also a translation movement along the cantilever longitudinal axis, can operate simultaneously in the working area with a degree of overlap avoiding collisions or other types of interference.

Also, the operating machine advantageously comprises lateral openings below each base element, which allow accessing the working area to introduce and remove the fixtures supporting the working pieces.

Without prejudice to the underlying principles, the details and embodiments may vary, even significantly, with respect to what has been described by way of example only, without departing from the extent of protection. The extent of protection is defined by the annexed claims.

Although in the exemplary embodiment a machine with two base element arranged parallel carrying two cantilevers each is described, which presents advantages in terms of efficiency of operation and management of overlap area, the solution described here is in general directed to a machine having a plurality of cantilevers each moving along the axes X and Y, which are arranged on at least a base element, in the exemplary embodiment two base elements carrying two cantilever each, although the solution may refer also to different distributions of the plurality of cantilevers, on a sole base element, or one cantilever on each of two base elements, or a different number of cantilevers e.g,, one on one base two on the other two.

## Claims

1. A laser operating machine, comprising:
a plurality of laser operating heads (OH₁, OH₂, OH₃, OH₄) configured to perform laser processing, mounted on respective cantilevers (14₁, 14₂, 14₃, 14₄),
said cantilevers (14₁, 14₂, 14₃, 14₄) being mounted on at least a base element (111, 11r) with an elongated shape, movable along a base element longitudinal axis (X) of said at least base element (111, 11r),
each cantilever (14₁, 14₂, 14₃, 14₄) extending substantially orthogonal with respect to said base element longitudinal axis (X),
each cantilever (14₁, 14₂, 14₃, 14₄) being actuated by a respective actuation system (A₁, A₂, A₃, A₄) comprising at least a translation along said base element longitudinal axis (X) and a cantilever longitudinal axis (Y) orthogonal to such base element longitudinal axis (X).

2. A laser operating machine according to claim 1, wherein said laser operating machine (10) comprises two base elements (111, 11r) arranged parallel one to the other along their longer dimension at a distance one from the other, identifying an operating area (20, 30) in the space between such base elements (111, 11r),
each base element (111, 11r) carrying at least two cantilevers (14₁, 14₂, 14₃, 14₄) extending inwardly in the space between such base elements (111, 11r), substantially orthogonal with respect to said base element longitudinal axis (X),
each cantilever (14₁, 14₂, 14₃, 14₄) being actuated by a respective actuation system (A₁, A₂, A₃, A₄) comprising at least translation along said base element longitudinal axis (X) and cantilever longitudinal axis (Y) orthogonal to such base element longitudinal axis (X).

3. A laser operating machine according to claim 1 or 2, wherein said at least base element (111, 11r) carrying at least two cantilevers (14₁, 14₂, 14₃, 14₄) extending substantially orthogonal with respect to said base element longitudinal axis (X).

4. A operating machine according to claim 1 or 2, wherein said actuation system (A₁, A₂, A₃, A₄) comprising at least a translation along said base element longitudinal axis (X) and cantilever longitudinal axis (Y) orthogonal to such base element longitudinal axis (X), comprises cantilever beams (14₁, 14₂, 14₃, 14₄) mounted on respective supports (15₁, 15₂, 15₃, 15₄) fixedly with respect to movement of the supports 15₁, 15₂, 15₃, 15₄) along said base element longitudinal axis (X), said cantilevers (14₁, 14₂, 14₃, 14₄) being mounted displaceable with respect their corresponding support (15₁, 15₂, 15₃, 15₄) along said cantilever longitudinal axes (Y).

5. A laser operating machine according to claim 4, wherein said supports (15₁, 15₂, 15₃, 15₄) are mounted on tracks along said base element longitudinal axis (X), movable by sliding or rolling on bearings.

6. A laser operating machine according to claim 4, wherein said cantilever are assembled to an upper portion of the corresponding supports (15₁, 15₂, 15₃, 15₄), movable by a translational actuation (16₁, 17₁) displacing the cantilever (14₁) with respect to a fixed portion (16₁) on said support (15₁).

7. A laser operating machine according to claim 6, wherein said a translational actuation (16₁, 17₁) displacing the cantilever (14₁) comprises a magnetic linear motor (16₁) fixedly coupled to the upper portion of the support (15₁) and the cantilever comprises a magnetic actuatable portion (17₁, 17₁a) on its lower portion.

8. A laser operating machine according any of the preceding claims, wherein said base elements (111, 11r) having an oblong, in particular parallelepiped, shape rest on a plurality of pillars (121, 12r) identifying opening (19l, 19r) between them to access the operating area (20, 30), in particular to introduce or remove fixtures (25).

9. A laser operating machine according to any of the previous claims, wherein one or more of said cantilevers (14₁, 14₂) mounted on one of the base elements (111) and one or more of the cantilevers (14₃, 14₄) mounted on the other base element (11r) have a respective length and a displacement along said cantilever axis which determines a least an overlap (312, 313, 324, 334) of the respective laser head operating areas (30₁, 30₂, 30₃, 30₄).

10. A laser operating machine according to any of the previous claims, wherein said operating heads (OH₁, OH₂, OH₃, OH₄) are movable along a vertical axis, in particular with respect to their respective cantilevers (14₁, 14₂, 14₃, 14₄).

11. A laser operating machine according to any of the previous claims, wherein said base elements (111, 11r) are mounted on pillars (121, 12r) above the pavement, defining openings (19l, 19s) between said pillars (121, 12r) and said base elements (111, 11r) with a size suitable to allow passage of fixtures (25) for the working pieces.

12. A laser operating machine according to any of the previous claims, wherein said operating heads (OH₁, OH₂, OH₃, OH₄) are laser cutting heads or laser welding heads.

13. A laser operating machine according to any of the previous claims, wherein said operating heads (OH₁, OH₂, OH₃, OH₄) are arranged on the respective cantilever (14₁, 14₂, 14₃, 14₄) on the side or corner nearer to or facing the working area (30).

14. A method to control a machine according to any of claims 1 to 13, comprising:
assigning a set of toolpaths (SCTFP, PP) to a plurality of operating heads (OH₁, OH₂, OH₃, OH₄) of an operating machine apparatus (10), the operating heads (OH₁, OH₂, OH₃, OH₄) being displaceable within respective operating regions (30₁, 30₂, 30₃, 30₄) via a plurality of sub-systems (14₁, 14₂, 14₃, 14₄; A₁, A₂, A₃, A₄) of the operating machine apparatus (10),
wherein the method comprises:
generating (400) a global toolpath (TP) based on a computerized object model (OB) provided via a computer-aided design, CAD processing stage (CP);
based on respective operating regions (30₁, 30₂, 30₃, 30₄), in particular said respective operating regions (30₁, 30₂, 30₃, 30₄) of the operating heads of the plurality of operating heads (OH₁, OH₂, OH₃, OH₄) being partially overlapping (312, 313, 324, 334), and on a target travel time, partitioning (402) the global toolpath (TP) and assigning toolpath partitions of a set of toolpath partitions (TP₁, ..., TP₄) to respective operating heads of the plurality of operating heads (OH₁, OH₂, OH₃, OH₄);
providing a computerized machine model (DT) configured to emulate the dynamical behavior of the operating machine apparatus (10);
emulating (402), via the computerized machine model (DT), the displacement of the operating heads in the plurality of operating heads (OH₁, OH₂, OH₃, OH₄) according to the toolpath partitions in the set of toolpath partitions (TP₁, ..., TP₄);
based on the emulated displacement, detecting (404) collisions among machine operating heads in the plurality of machine operating heads (OH₁, OH₂, OH₃, OH₄);
in response to detecting the presence of mutual collisions, adjusting and re-assigning (402, 404, 406) toolpath partitions of the set of toolpath partitions (TP₁, ..., TP₄) to respective operating heads in the plurality of machine operating heads (OH₁, OH₂, OH₃, OH₄) ;
in response to failing to detect the presence of mutual collisions, providing (406) the set of toolpath partitions (TP1, ..., TP4) as a set of collision-free toolpaths (CFTP₁, ..., CFTP₄; SCFTP);
providing (410) the set of collision-free toolpaths (CFTP₁,..., CFTP₄; SCFTP) to the operating machine apparatus (10) for driving (100) the sub-systems in the set of sub-systems (14₁, 14₂, 14₃, 14₄; A₁, A₂, A₃, A₄) to displace each of the operating heads in the plurality of operating heads ((OH₁, OH₂, OH₃, OH₄) according to the respective collision-free toolpath of the set of collision-free toolpaths (CFTP₁,..., CFTP₄; SCFTP)

15. The method of claim 14, wherein partitioning (402) and assigning toolpath partitions of a set of toolpath partitions (TP₁, ..., TP₄) comprises reducing, preferably minimizing, the target travel time in which each sub-system in the set of sub-systems (14₁, 14₂, 14₃, 14₄; A₁, A₂, A₃, A₄) displaces each operating head in the plurality of operating heads (OH₁, OH₂, OH₃, OH₄) through each of the respective toolpath partitions of the set of toolpath partitions (TP₁, ..., TP₄), preferably wherein the target travel time for each toolpath partition of the set of toolpath partitions (TP₁, ..., TP₄) is about the same.

16. The method of claim 14 or claim 15, wherein detecting (404) mutual collisions among operating heads in the plurality of operating heads (OH₁, OH₂, OH₃, OH₄) comprises:
during the emulated displacement (402), computing a pair-wise distance among positions of operating heads of the plurality of operating heads (OH₁, OH₂, OH₃, OH₄), and
performing a comparison (404) of the computed pair-wise distance with a threshold value, indicating the presence of a collision in response to the comparison failing to exceed a threshold value.

17. The method of any one of the previous claims from 14 to 16, wherein adjusting and re-assigning (402, 404, 406) toolpath partitions of the set of toolpath partitions (TP₁, ..., TP₄) to respective operating heads in the plurality of operating heads (OH₁, OH₂, OH₃, OH₄) comprises introducing a delay in the displacement of at least one head with respect to the other operating heads involved in the detected collision, in particular comprising tagging (408) the set of collision-free toolpaths (CFTP₁, ..., CFTP₄; SCFTP) and storing the tagged set of collision-free toolpaths into a computer-readable medium.
